# EUROPÄISCHE PATENTSCHRIFT

(11) **EP 0 319 716 B1**
(45) Veröffentlichungstag und Bekanntmachung des Hinweises auf die Patenterteilung: **12.05.1993**
(21) Anmeldenummer: 88118483.2
(22) Anmeldetag: 05.11.1988
(51) Int. Cl.: G01V 1/00

(54) **Verfahren zur Erfassung seismischer Daten**
Method for obtaining seismic data
Méthode pour saisir des données sismiques

(30) Priorität: 09.12.1987 DE 3742147
(43) Veröffentlichungstag der Anmeldung: 14.06.1989
(73) Patentinhaber: PRAKLA-SEISMOS GmbH, 30655 Hannover (DE)
(72) Erfinder: Marschall, Roland, Dr. Dipl.-Ing., D-3000 Hannover 91 (DE)
(74) Vertreter: Meyer, Ludgerus A., Dipl.-Ing.

(56) Entgegenhaltungen:
- US-A- 3 793 620
- OFFSHORE, Band 47, Nr. 7, Juli 1987, Seiten 36-39, Tulsa, Ohio, US; J.I. SANDERS: "Seismic opens shallow play"
- PROCEEDINGS 1986 WORKING SYMPOSIUM ON OCEANOGRAPHIC DATA SYSTEMS, 1986, IEEE Catalog Number 86CH2269-9-IEEE Computer Society Press, US; J.-M. AUGUSTIN: "Side scan acoustic images processing software"
- H.R. NELSON, Jr.: "New technologies in exploration geophysics", 1983, Seiten 96-102, Gulf Publishing Co., Houston, US

## Beschreibung

Die Erfindung betrifft ein Verfahren zur Erfassung seismischer Daten nach dem Oberbegriff des Anspruchs 1.

In der Seeseismik werden seit einigen Jahren verstärkt 3D-Messungen durchgeführt, deren wesentlicher Vorteil in der großen Informationsdichte und damit erhöhter Aussagegenauigkeit, in der Verfügbarkeit echter vertikaler Seismogramme und der Möglichkeit der Erstellung horizontaler Schnitte besteht. Die Erfassung eines 3D-Datenvolumens erfolgt in der Seeseismik im wesentlichen mit hinter Schiffen geschleppten Streamern. Häufig werden mehrere derartiger Streamer parallel zueinander geschleppt.

Um ein vorgegebenes Gebiet erfassen zu können, wird das Schleppschiff, das gleichzeitig die Sender oder Schallquellen schleppt, vorzugsweise in parallelen Kursen über das Gesamtgebiet geführt. Aus den erfaßten Spuren können dann nach dynamischen und statischen Korrekturen und Stapelung ein Datenvolumen erstellt und Profile des Gebietes in jeder beliebigen Richtung ermittelt und ausgewertet werden.

Die Erfassung eines 3D-Datenvolumens erfordert die Ermittlung der zugrundeliegenden Daten in einem engliegenden Raster. Dies bedingt, daß sowohl Schiff als auch Streamer genau positioniert werden bzw. deren Position genau erfaßt ist. In der Regel erfolgt die Erfassung der Spuren während einer zu überfahrenden Strecke von mehreren Kilometern, wobei der Abstand zum vorhergehenden Kurs relativ gering ist. Bei vorhandenen Strömungen kann die Drift des Streamers beträchtlich sein. Obgleich diese Abdrift bei der Erstellung des endgültigen Datenvolumens eliminiert werden kann, kann sie jedoch zu Problemen führen, wenn eine Meßfahrt in Gebieten erfolgen soll, in denen ortsfest angeordnete Objekte, wie z. B. Ölplattformen, Bojen, Untiefen oder andere feste Objekte vorhanden sind. Diese Objekte können in vielen Fällen eine Erfassung des Gebiets mit Hilfe geschleppter Streamer völlig verhindern. Insbesondere in Gebieten, in denen Bohrplattformen vorhanden sind, sind Sicherheitsabstände einzuhalten, die es mit sich bringen, daß in derartigen Gebieten nahezu keine Messungen mit Hilfe von hinter Schiffen geschleppten Streamern möglich sind.

Aus der Firmenschrift der Prakla-Seismos GmbH, "Shallow Water Geophysicals Surveys", Nr. 5 000 480, Hannover, 1980 ist ein Verfahren zur Erfassung seismischer Daten eines in Teilgebiete unterteilten Gebiets unter Verwendung wenigstens eines Abschnitts von in einer Reihe ortsfest angeordneter seismischer Empfänger und wenigstens einem relativ zur Reihe der Empfänger auf einem Meßraster bewegbaren seismischen Sender bekannt.

Das dort angegebene Verfahren dient zur Verwendung im Übergangsbereich On-Shore/Off-Shore, in dem seismische Empfänger und seismische Sender getrennt voneinander angeordnet bzw. bewegt werden. Ein Nachschleppen von Streamern ist dort wegen der geringen Wassertiefen nur eingeschränkt möglich. Es handelt sich um die Erfassung eines einheitlichen Datenvolumens mit gleichbeabstandeten, parallel oder senkrecht zueinander gerichteten Empfängerketten, die lediglich für die besonderen Anforderungen des Einsatzgebietes entsprechend stückweise angepaßt sind (Landkabel, Baykabel und freischwimmende Streamer).

Es ist daher Aufgabe der Erfindung, ausgehend von der Firmenschrift der Prakla-Seismos GmbH, ein Verfahren zur Erfassung seismischer Daten eines Gebiets anzugeben, das in seiner Gesamtheit einer Erfassung, insbesondere einer 3D-Erfassung seismischer Daten, nicht unmittelbar zugänglich ist.

Diese Aufgabe wird durch die im Anspruch 1 angegebene Erfindung gelöst. Vorteilhafte Weiterbildungen der Erfindung sind in abhängiger Ansprüchen angegeben.

Mit Hilfe des erfindungsgemäßen Verfahrens ist es möglich, auch für solche Gebiete ein einheitliches 3D-Datenvolumen zu erfassen, in denen eine übliche Erfassung mit Hilfe von hinter einem Schiff geschleppten Streamern nicht möglich ist.

Nach der Erfindung wird das gesamte zu erfassende Gebiet zunächst in mehrere Teilgebiete aufgeteilt, deren Orientierung und Größe in Abhängigkeit von vorliegenden, ortsfesten Objekten gewählt ist.

Anstelle herkömmlicher Streamerseismik, bei der sowohl Schallsender als auch Schallempfänger im wesentlichen entlang eines gemeinsamen Weges ortsveränderlich bewegt werden, wird bei dem Verfahren nach der Erfindung lediglich die Schallquelle bewegt, während die Empfänger ortsfest zwischen den Objekten angeordnet sind. Die Bestimmung der Orte der Empfänger ist daher sehr viel einfacher als bei einem geschleppten Streamer. Der Ort eines Schiffes kann ebenfalls relativ genau bestimmt werden.

Die Erfindung ermöglicht den weiteren Vorteil, daß der Sender auch quer zur Empfängerreihe bewegt werden kann, wie es in der 3D-Landseismik üblich ist.

Da die seismische Empfängerkette nicht mehr von einem Schiff geschleppt werden muß, können viel geringere Sicherheitsabstände vom Schiff zur jeweiligen Bohrplattform eingehalten werden, ohne daß eine Gefährdung der Plattform besteht. Ein weiterer Vorteil liegt darin, daß die gesamte Aufnahmeanordnung quasi auf die Länge des Schiffes begrenzt ist, während sie bei einer üblichen Schleppseismik eine Länge aufweist, die Schiff und Streamerkette beinhaltet.

Nach vollständiger Erfassung der gewünschten seismischen Spuren in jedem der Teilgebiete erfolgt anschließend an dynamische und statische Korrekturen sowie Stapelung eine geometrische Verknüpfung der erfaßten Daten zu einem einheitlichen Datenvolumen des Gesamtgebietes. Hierbei können die Daten sich überlappender Teilgebiete noch einmal einer zusätzlichen Stapelung unterworfen werden, um die Aussagefähigkeit dieser Daten weiter zu verbessern.

Als Ergebnis des erfindungsgemäßen Verfahrens ergibt sich ein Datenvolumen, das einem auf üblichem Wege gewonnenen Datenvolumen eines Seegebietes ohne Hindernisse zumindest ebenbürtig ist.

Die Erfindung wird nachstehend anhand eines Ausführungsbeispieles näher erläutert. Es zeigen:
- Fig. 1: eine Darstellung des zu erfassenden Gesamtgebietes mit eingezeichneten Teilgebieten,
- Fig. 2a,b,c: eine Darstellung der Schritte zur Transformierung eines Meßrasters,
- Fig. 3: die Darstellung eines fertig transformierten Meßrasters,
- Fig. 4: die Darstellung eines Datenvolumens, das mit Hilfe der Erfindung gewonnen wurde.

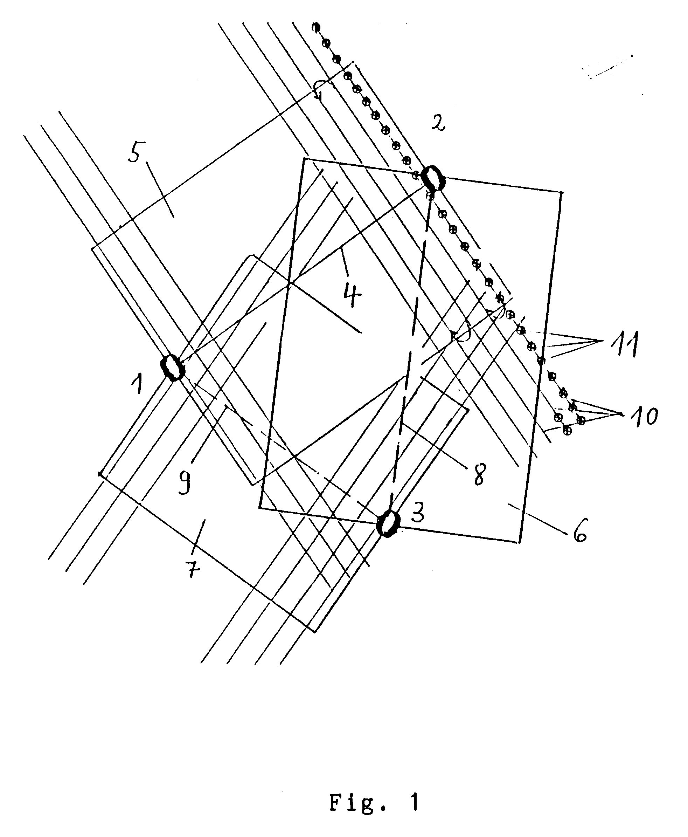

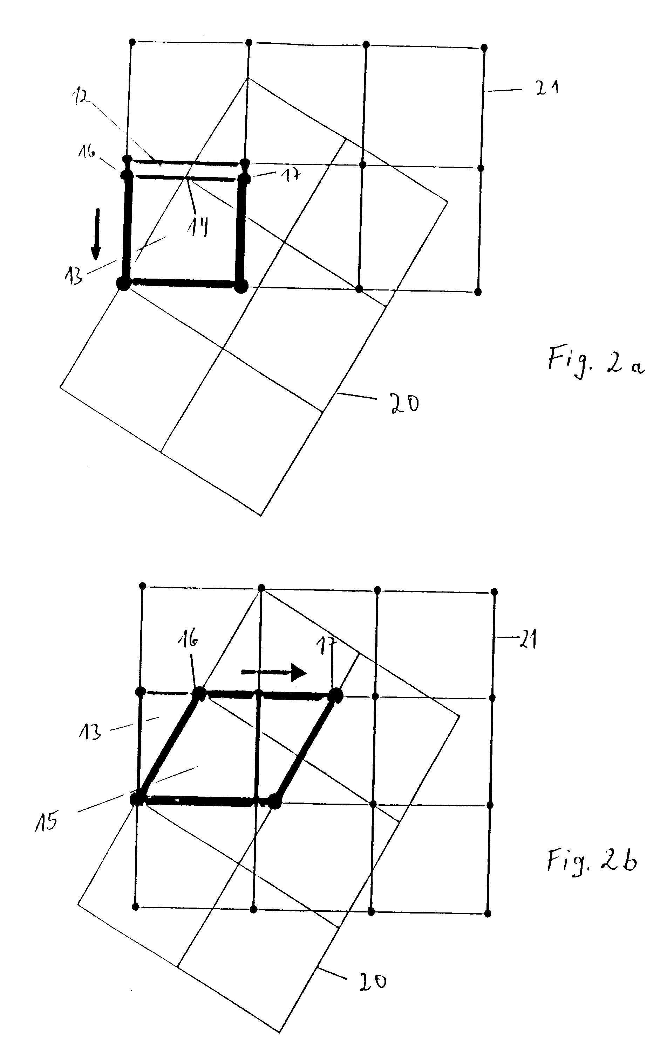

Die Darstellung von Fig. 1 zeigt drei ortsfeste Objekte 1, 2 und 3 z.B. Öltürme oder Plattformen, die in einem bestimmten Seegebiet vorhanden sind. Wenn der Wunsch besteht, dieses Seegebiet mit den vorhandenen Ölplattformen seismisch zu erfassen, ist es normalerweise nicht möglich, zwischen den Plattformen einen Streamer hindurchzuziehen, da um eine Plattform herum bestimmte Sicherheitsgrenzen beachtet werden müssen.

Nach der Erfindung wird jeweils zwischen zwei ortsfest angeordneten Objekten eine Reihe von seismischen Empfängern ortsfest angeordnet, z. B. ein Streamer 4. Dieser wird mit üblichen Mitteln in eine gewünschte Tiefe abgesenkt. Bei Betrachtung der Plattformen 1 und 2 bildet der Streamer 4 die Mittellinie eines Rechtecks 5, das ein Teilgebiet des zu erfassenden Gesamtgebietes darstellt. Gleichzeitig zur Erfassung des ersten Teilgebietes 5 können weitere Teilgebiete 6 und 7 erfaßt werden, wobei Empfängerketten 8 bzw. 9 zwischen den Stationen 2 und 3 bzw. 1 und 3 eingerichtet sind. Die Teilgebiete können gleichzeitig oder nacheinander seismisch erfaßt werden.

Ein Streamer zwischen zwei Stationen weist eine Reihe von seismischen Empfängern im Abstand zueinander auf. Durch die feste Anordnung der Empfängerreihe zwischen den Stationen liegt die Position der Empfänger fest. Die Schallquelle, insbesondere Wasser- oder Luftpulser, wird von einem Schiff geschleppt, das sich vorzugsweise quer zur Längserstreckung der Empfängerreihe bewegt. Dabei fährt das Schiff über parallel zueinander liegende Kurse, z.B. bei 10, deren Länge etwa der doppelten Breite der jeweiligen Teilgebiete 5, 6 oder 7 beträgt, so daß eine vollständige seismische Erfassung eines Untergrundbereiches möglich ist, dessen Fläche etwa einer Teilfläche 5, 6 oder 7 entspricht.

Das Schiff bewegt sich mit der Schallquelle entlang einem vorgewählten Muster über ein Raster, dessen Rasterpunkte 11 die jeweiligen Schußpositionen bestimmen, an denen der Sender erregt wird.

Nachdem sämtliche Teilgebiete des Gesamtgebietes seismisch erfaßt sind, werden die aufgenommenen Spuren zunächst einer üblichen statischen und dynamischen Korrektur sowie Stapelung unterzogen. Es ergeben sich damit Teildatenvolumina des Gesamtgebietes.

Zur Erstellung eines 3D-Datenvolumens des Gesamtgebietes ist eine Zusammenfügung der Datenvolumina der Teilgebiete erforderlich, wobei die Datenvolumina der Teilgebiete einer Translation, Dilation und/oder Rotation des der Datenerfassung zugrunde liegenden Meßrasters unterzogen werden. Dies erfolgt vorzugsweise über ein Computerprogramm, dessen Grundlage z.B. in F. Kirchheimer, Transformation of Seismic 3D Data by Separated Sinc Interpolation, 48. EAEG Tagung 1986, Oostende, zu entnehmen ist. Danach kann ein vorgegebenes Datenvolumen, das in einem bestimmten Meßraster ermittelt wurde, geometrisch in ein anderes Datenvolumen eines anderen Meßrasters transformiert werden, das bei Erfassung der Daten in dem anderen Meßraster erzeugt worden wäre, indem im wesentlichen das ursprüngliche Meßraster zunächst einer Dilation unterzogen wird, und anschließend in der flächenhaften Orientierung gedreht wird, so daß das ursprüngliche Datenvolumen die gewünschte Orientierung aufweist. Durch diese Maßnahme können sämtliche Teildatenvolumina der Teilgebiete zusammengefaßt werden, so daß alle Teildatenvolumina die gleiche Orientierung aufweisen. Insbesondere für diejenigen Gebiete, in denen Überlappungen der Teilgebiete vorliegen, kann noch eine zusätzliche Stapelung der Daten durchgeführt werden.

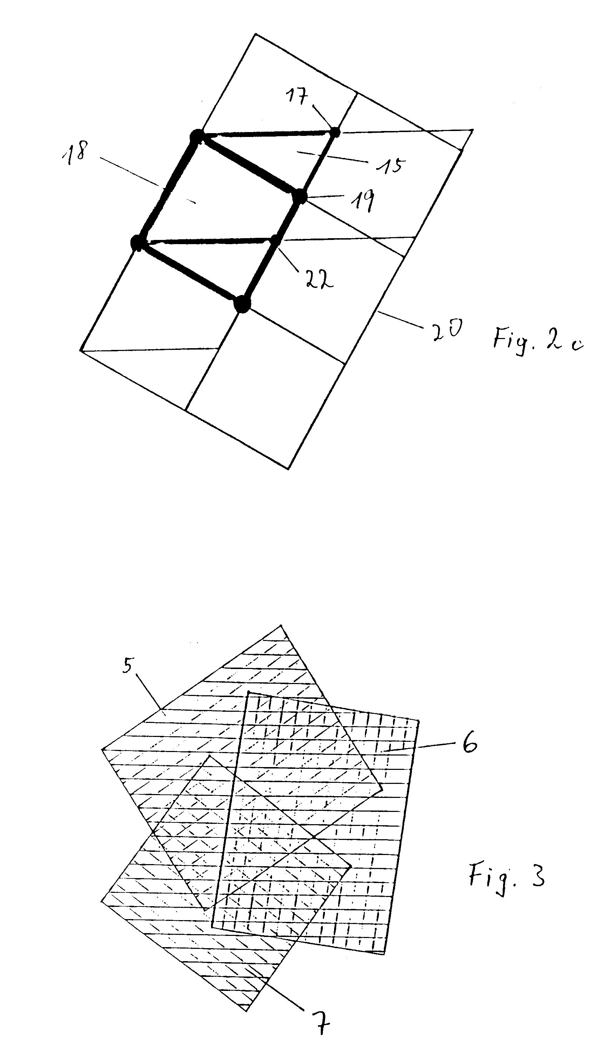

Die Figuren 2 a-c zeigen die wesentlichen Schritte der Transformation. Es wurden zwei Raster dargestellt, wobei 21 das Ausgangsraster und 20 das gewünschte Zielraster kennzeichnen.

Die Eckpunkte eines Rasterrechteckes 12 des Ausgangsrasters werden zunächst (Fig. 2a) zu einem neuen Rechteck 13 so weit gestaucht, daß die obere Kante des Ausgangsrechtecks bis zum Punkt 14 parallel verschoben wird. Anschließend erfolgt gemäß Fig. 2 b eine seitliche Verschiebung der Punkte 16 und 17 des Rechtecks 13, und gleichzeitige seitliche Dehnung, so daß ein Parallelogramm 15 entsteht. Dieses wird dann durch Verschiebung der Punkte 17 und 22 gemäß Fig. 2c zur Deckung mit dem Zielraster 20 gebracht. Es entsteht wieder ein Rechteck 18, bei dem der Eckpunkt 19 durch Verschiebung des Punktes 17 entstanden ist.

Fig. 3 zeigt die gemeinsame waagerechte Orientierung des Meßrasters aller Teilgebiete 5,6 und 7 nach erfolgter Transformation.

Bei einer Anordnung, bei der zwei Streamer zwischen drei ortsfesten Stationen angeordnet sind, erfolgt eine Meßfahrt vorzugsweise rechtwinklig zu einem der Streamer, während die andere Streamerkette gleichzeitig in einem von 90° abweichenden Winkel überfahren wird. Auch diese Anordnung läßt eine geometrische Transformation der gewonnenen Daten zu.

Nachdem auf die dargestellte Weise ein Datenvolumen des Gesamtgebietes erstellt worden ist, kann eine übliche 3D-Migration erfolgen, so daß ein voller 3D-Datensatz zur Verfügung steht, der auf andere Weise nicht erstellbar gewesen wäre.

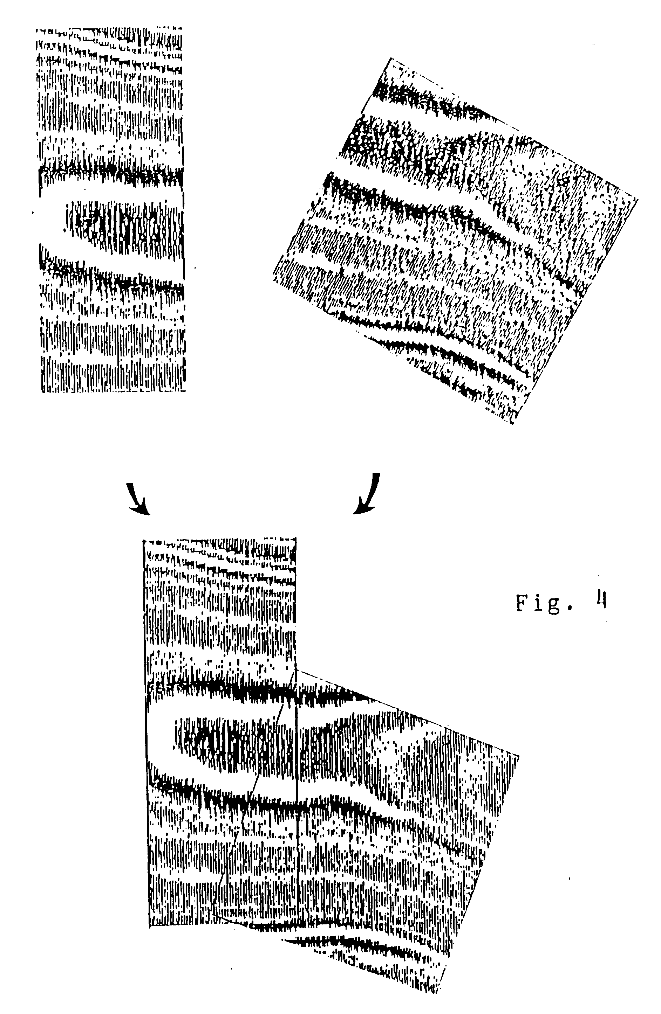

Fig. 4 zeigt Horizontalschnitte verschiedener Teilgebiete, die durch Verschiebung, Stauchung und Drehung zu einem einheitlichen 3D-Datenvolumen zusammengefügt sind.

### Bezugszeichenliste

- 1: Objekt
- 2: Objekt
- 3: Objekt
- 4: Empfängerkette
- 5: Teilgebiet
- 6: Teilgebiet
- 7: Teilgebiet
- 8: Empfängerkette
- 9: Empfängerkette
- 10: Kurse
- 11: Erregungsorte
- 12: Rechteck
- 13: Rechteck
- 14: Punkt
- 15: Parallelogramm
- 16: Punkt
- 17: Punkt
- 18: Rechteck
- 19: Eckpunkt
- 20: Zielraster
- 21: Ausgangsraster

## Patentansprüche

1. Verfahren zur Erfassung marine-seismischer Daten eines mit Hindernissen versehenen Gesamtgebiets, das in Teilgebiete aufgeteilt ist, in denen jeweils eine marineseismische Empfängerkette ortsfest angeordnet ist, mit wenigstens einem an einem Schiff befindlichen seismischen Sender, der relativ zur Empfängerkette nach einem bestimmten Muster in einem vorgegebenen Raster bewegt wird, bei dem in jedem Teilgebiet eine vollständige Erfassung der seismischen Daten erfolgt, bei dem die in den einzelnen Teilgebieten erfaßten seismischen Spuren anschließend durch geometrische Verknüpfungen zu einem einheitlichen Datenvolumen des Gesamtgebiets zusammengefaßt werden, dadurch gekennzeichnet, daß Orientierung und Größe der Teilgebiete in Abhängigkeit von der Lage der Hindernisse in der Weise gewählt sind, daß die Teilgebiete Rechtecke, Parallelogramme oder Trapeze sind, bei denen die Empfängerketten jeweils längs der Verbindungslinie zwischen zwei ortsfesten Hindernisse angeordnet sind und auf der Mittellinie der Teilgebiete liegen, daß das Schiff sich entlang eines einem Teilgebiet zugeordneten Rasters relativ zu der Empfängerkette unter Aussendung von seismischen Erregungen bewegt, und daß die in den einzelnen Teilgebieten erfaßten seismischen Spuren anschließend durch eine Einrichtung zur Koordinatentransformation des der Datenerfassung zugrunde liegenden Meßrasters zu einem einheitlichen Datenvolumen des Gesamtgebiets zusammengefaßt werden.

2. Verfahren nach Anspruch 1, bei dem eine Reihe der Empfänger in verschiedenen Teilgebieten in verschiedenen azimutalen Richtungen ausgelegt ist, dadurch gekennzeichnet, daß die in den Teilgebieten erfaßten Daten vor der Zusammenfügung zu einem einheitlichen Datenvolumen durch die Einrichtung zur Koordinatentransformation einer Translation, Dilation und/oder Rotation des der Datenerfassung zugrunde liegenden Meßrasters unterzogen werden.

3. Verfahren nach Anspruch 1, dadurch gekennzeichnet, daß die Hindernisse Bohreinrichtungen sind.

4. Verfahren nach Anspruch 1 oder 3, dadurch gekennzeichnet, daß sich das Schiff im wesentlichen quer zur Längserstreckung der Reihe der Empfänger auf in Abstand parallel zueinander liegenden Kursen bewegt.

5. Verfahren nach Anspruch 1 oder 3, dadurch gekennzeichnet, daß sich das Schiff im wesentlichen parallel zur Längserstreckung der Reihe der Empfänger auf in Abstand parallel zueinander liegenden Kursen bewegt.

6. Verfahren nach Anspruch 2, dadurch gekennzeichnet, daß für sich überlappende Teilgebiete vor der Zusammenfügung zu dem einheitlichen Datenvolumen eine ergänzende Stapelung der erfaßten Daten durchgeführt wird.

7. Verfahren nach Anspruch 4, bei dem wenigstens ein Teilgebiet eine Rechteckfläche bildet, dadurch gekennzeichnet, daß das Schiff sich auf parallelen Kursen im wesentlichen bis in eine Entfernung der doppelten Länge einer Seitenkante des Rechtecks zu beiden Seiten der Empfängerkette bewegt.

8. Verfahren nach einem oder mehreren der vorhergehenden Ansprüche, gekennzeichnet durch die Verwendung für eine seismische Erfassung des Untergrundes als einheitliches 3D-Datenvolumen des Gesamtgebietes.

9. Verfahren nach Anspruch 1 oder 2, dadurch gekennzeichnet, daß die Enden mehrerer Empfängerketten gleichzeitig an einem ortsfesten Hindernis angeordnet sind und daß der Sender entlang eines einzigen Kurses über mehrere Teilgebiete bewegt wird.

## Claims

1. Method for acquiring marine seismic data of an overall area which has obstacles and is divided into subareas in each of which a marine seismic receiver chain is arranged in a fixed fashion, having at least one seismic transmitter which is located on a ship and is moved relative to the receiver chain in accordance with a specific pattern in a prescribed grid, in which complete acquisition of the seismic data is performed in each subarea, in which the seismic tracks acquired in the individual subareas are subsequently combined by geometrical connections to form a uniform data volume of the overall area, characterised in that the orientation and size of the subareas are selected as a function of the position of the obstacles in such a way that the subareas are rectangles, parallelograms or trapezia in which the receiver chains are arranged in each case along the connecting line between two fixed obstacles and are situated on the centre-line of the subareas, in that the ship moves along an grid assigned to a subarea relative to the receiver chain while emitting seismic excitations, and in that the seismic tracks acquired in the individual subareas are subsequently combined by a device for coordinate transformation of the measurement grid on which the data acquisition is based to form a uniform data volume of the overall area.

2. Method according to Claim 1, in which a row of the receivers is set out in different subareas in different azimuthal directions, characterised in that before being combined to form a uniform data volume by the device for coordinate transformation the data acquired in the subareas are subjected to a translation, dilation and/or rotation of the acquisition grid on which the data acquisition is based.

3. Method according to Claim 1, characterised in that the obstacles are drilling devices.

4. Method according to Claim 1 or 3, characterised in that the ship moves essentially at right angles to the longitudinal extent of the row of the receivers on courses spaced apart parallel to one another.

5. Method according to Claim 1 or 3, characterised in that the ship moves essentially parallel to the longitudinal extent of the row of the receivers on courses spaced apart parallel to one another.

6. Method according to Claim 2, characterised in that for overlapping subareas a supplementary stacking of the acquired data is carried out before they are combined to form the uniform data volume.

7. Method according to Claim 4, in which at least one subarea forms a rectangular area, characterised in that the ship moves on parallel courses essentially as far as a distance double the length of a side of the rectangle on both sides of the receiver chain.

8. Method according to one or more of the preceding claims, characterised by being used for seismic acquisition of the background as a uniform 3D data volume of the overall area.

9. Method according to Claim 1 or 2, characterised in that the ends of a plurality of receiver chains are arranged simultaneously at one fixed obstacle, and in that the transmitter is moved along a single course over a plurality of subareas.

## Revendications

1. Procédé pour l'enregistrement de données sismiques marines d'une zone d'ensemble comportant des obstacles et divisée en zones partielles dans lesquelles sont disposées de façon fixe des chaînes de récepteurs sismiques marines respectives, avec au moins un émetteur sismique se trouvant sur un bateau et déplacé par rapport à la chaîne de récepteurs suivant un dessin défini dans une trame prédéterminée, selon lequel un enregistrement complet des données sismiques se fait dans chaque zone partielle et les traces sismiques enregistrées dans les différentes zones partielles sont ensuite réunies, grâce à des liaisons géométriques, en un volume de données homogène de la zone d'ensemble, caractérisé en ce que l'orientation et la taille des zones partielles sont choisies, en fonction de la position des obstacles, de telle sorte que les zones partielles soient des rectangles, des parallélogrammes ou des trapèzes pour lesquels les chaînes de récepteurs sont disposées à chaque fois le long de la ligne de liaison entre deux obstacles fixes et se trouvent sur l'axe médian des zones partielles, en ce que le bateau se déplace par rapport à la chaîne de récepteurs le long d'une trame associée à une zone partielle, en émettant des excitations sismiques, et en ce que les traces sismiques enregistrées dans les différentes zones partielles sont ensuite réunies en un volume de données homogène de la zone d'ensemble par un dispositif pour la transformation de coordonnées de la trame de mesure sur laquelle est basé l'enregistrement de données.

2. Procédé selon la revendication 1, selon lequel une série de récepteurs est installée dans des zones partielles différentes, dans des directions azimutales différentes, caractérisé en ce que les données enregistrées dans les zones partielles, avant d'être réunies en un volume de données homogène par le dispositif pour la transformation de coordonnées, sont soumises à une translation, à une dilation et/ou à une rotation de la trame de mesure sur laquelle est basé l'enregistrement de données.

3. Procédé selon la revendication 1, caractérisé en ce que les obstacles sont des dispositifs de forage.

4. Procédé selon la revendication 1 ou 3, caractérisé en ce que le bateau se déplace sensiblement transversalement par rapport à la disposition longitudinale de la série de récepteurs, sur des trajectoires parallèles et espacées.

5. Procédé selon la revendication 1 ou 3, caractérisé en ce que le bateau se déplace sensiblement parallèlement par rapport à la disposition longitudinale de la série de récepteurs, sur des trajectoires parallèles et espacées.

6. Procédé selon la revendication 2, caractérisé en ce que, pour des zones partielles se chevauchant, un empilage complémentaire des données enregistrées est réalisé avant leur réunion en volume de données homogène.

7. Procédé selon la revendication 4, selon lequel au moins une zone partielle définit une surface rectangulaire, caractérisé en ce que le bateau se déplace, sur des trajectoires parallèles, sensiblement jusqu'à un éloignement correspondant au double de la longueur d'un bord latéral du rectangle, de chaque côté de la chaîne de récepteurs.

8. Procédé selon l'une au moins des revendications précédentes, caractérisé par l'utilisation, pour un enregistrement sismique, du sous-sol comme volume de données en trois dimensions homogène de la zone d'ensemble.

9. Procédé selon la revendication 1 ou 2, caractérisé en ce que les extrémités de plusieurs chaînes de récepteurs sont disposées en même temps au niveau d'un obstacle fixe, et en ce que l'émetteur est déplacé sur plusieurs zones partielles suivant une trajectoire unique.
